# FASCICULE DE BREVET EUROPEEN

(11) **EP 1 829 288 B1**
(45) Date de publication et mention de la délivrance du brevet: **22.12.2010**
(21) Numéro de dépôt: 05798169.8
(22) Date de dépôt: 02.09.2005
(51) Int. Cl.: H04L 12/26

(54) **PROCEDE ET DISPOSITIF DE TEST D' EQUIPEMENT ET/OU DE PROTOCOLES UTILISES DANS UN RESEAU DE COMMUNICATIONS**
VERFAHREN UND EINRICHTUNG ZUR PRÜFUNG VON IN EINEM KOMMUNIKATIONSNETZ VERWENDETEN GERÄTEN UND/ODER PROTOKOLLEN
METHOD AND DEVICE FOR TESTING EQUIPMENT AND/OR PROTOCOLS USED IN A COMMUNICATION NETWORK

(30) Priorité: 10.09.2004 FR 0409662
(43) Date de publication de la demande: 05.09.2007
(73) Titulaire: Ercom Engineering Réseaux Communications, 78140 Vélizy-Villacoublay (FR)
(72) Inventeur: BRAUN, Daniel, F-31300 Toulouse (FR); RIBLE, Frédéric, F-91620 Nozay (FR)
(74) Mandataire: Schmit, Christian Norbert Marie
(86) Numéro de dépôt international: PCT/FR2005/050705
(87) Numéro de publication internationale: WO 2006/030140

(56) Documents cités:
- WO-A-02/103543
- WO-A-03/102804
- US-B1- 6 272 450

## Description

L'invention concerne un procédé et un dispositif de test d'équipement et/ou de protocoles utilisés dans un réseau de communications, permettant de traiter différents types de données.

L'invention concerne de façon plus précise un émulateur de signaux permettant de simuler les éléments d'un réseau, par exemple un réseau de téléphonie mobile. L'émulateur génère des signaux qui sont envoyés à l'équipement à tester, et, en retour, il analyse les données renvoyées par ce même équipement. Dans l'équipement, les données sont traitées par les protocoles à tester.

Les techniques connues pour simuler des réseaux de communications sont, d'une part, des procédés faisant appel à des logiciels, et, d'autre part, des procédés faisant appel à des circuits à logique programmable câblée.

Le document WO 02/103543 concerne un procédé et un système permettant de tester les capacités d'un réseau informatique. Le système de test décrit dans ce document met en ouvre un logiciel dédié par l'intermédiaire de plusieurs processeurs. Ce système peut être configure pour tester différentes applications et différents dispositifs, à travers toutes les couches OSI de l'architecture du réseau. Ce système de test fait appel a un système hybride, comportant un sous-système de traitement <<matériel >>, présentant des avantages en termes de puissance, et un sous-système << logiciel>> apportant, quant a lui, de la flexibilité au système général. Dans ce système, toutes les données sont traitées par le système hybride, c'est a dire que toutes les données subissent à la fois un traitement matériel et un traitement logiciel. Ce document montre un système dans lequel on utilise la partie logicielle du traitement pour adapter le traitement global au type de données a traiter. Ainsi, qu'une donnée soit simple ou complexe, elle sera traitée par les deux sous-systèmes de traitement.

Ces techniques présentent des inconvénients : les solutions à logiciel nécessitent une puissance de calcul trop importante, et les solutions câblées présentent une trop grande complexité pour les émulations complexes et de grande capacité.

Pour remédier à ces inconvénients, des technologies hybrides, utilisant ces techniques différentes, ont été proposées. Toutefois, ces technologies présentent elles aussi l'inconvénient de ne pas permettre aux utilisateurs de réaliser tous les tests ou mesures souhaités. En effet, ces technologies hybrides connues permettent de gérer seulement des séquences simples de messages; la complexité des tests réalisés est donc nécessairement faible.

L'invention vise à remédier à ces inconvénients.

Elle concerne un procédé de test d'équipement et/ou de protocoles utilisés dans un réseau de communications, le procédé comportant deux types de scénarios de test, le premier permettant de traiter des données simples et le second des données complexes. Les données consistent en des messages de différents types échangés par des entités communicantes et traités par des protocoles, appelés également algorithmes, se trouvant dans différents états, les états représentant les étapes de ces protocoles lorsqu'ils sont modélisés sous la forme d'un automate protocolaire. Les données sont définies par leur nombre de complexité C, égal au nombre d'états de l'automate protocolaire multiplié par le nombre de types de messages possibles. Ce nombre de complexité C est inférieur ou égal à une valeur prédéterminée N pour les données simples, et supérieur à la valeur N pour les données complexes. Le procédé est tel que les données reçues sont triées en fonction de leur complexité, et aiguillées pour que les données simples soient traitées par le premier protocole, et les données complexes traitées par le second protocole.

On précise ici que le « type » d'un message est indiqué par des valeurs conventionnelles dans la trame transportant les informations. Il peut s'agir d'adresses, de données à transporter sous différentes formes ou encore d'identifiants codant la signification des messages. On rappelle aussi que les « états » d'un protocole correspondent à une situation du protocole à un instant donné , c'est-à-dire une étape dans le déroulement logique des échanges et traitements.

L'automate protocolaire est un moyen pour modéliser les différents états dans lesquels peuvent se trouver les entités communicantes représentées par les protocoles qu'elles utilisent. Cet automate représente les différentes étapes d'un protocole de communication et les transitions permettant de passer d'une étape à l'autre. A chaque instant, chaque entité communicante se trouve obligatoirement dans l'une quelconque des étapes du protocole de communication, et peut donc être modélisée sous la forme d'un état.

Le tri et l'aiguillage des données permettent d'optimiser les performances du simulateur, notamment en ce qui concerne le débit et la complexité des données traitées. En effet, en disposant de scénarios de test différents pour les deux types de données, on peut adapter le protocole de traitement à la complexité du scénario de test et des données à traiter. On peut, par exemple, utiliser un protocole demandant peu de calculs, et donc très rapide, pour les données simples. Pour les données complexes, on peut choisir un protocole plus puissant, c'est-à-dire qui comprend un plus grand nombre d'opérations élémentaires et qui est donc à même de réaliser des calculs complexes.

Selon une réalisation, le premier scénario de test (données simples) est réalisé avec des moyens à logique câblée dans des composants programmables tels que des circuits FPGA ou des composants dédiés tels que des circuits ASIC.

Les composants programmables de type FPGA (Field Programmable Gate Array) et les composants dédiés de type ASIC (Application-Specific Integrated Circuit) permettent de traiter un très fort débit de données simples, ce qui permet de simuler un trafic intense sur le réseau. Les composants programmables présentent l'avantage d'être modifiables à volonté avec une souplesse proche de celle du logiciel.

Selon une réalisation de l'invention, le second scénario de test (données complexes) est réalisé avec des moyens logiciels et exécuté sur des processeurs généralistes ou sur des processeurs dédiés.

Les moyens logiciels permettent de traiter des données relativement complexes quel que soit le type de processeur utilisé. Les processeurs généralistes offrent une grande souplesse puisque tous les protocoles sont décrits de la même façon et peuvent donc être aisément modifiés. Les processeurs dédiés, quant à eux, sont moins coûteux que les processeurs généralistes et peuvent donc être multipliés pour atteindre des performances importantes. Toutefois, cette multiplicité des processeurs, associée à l'hétérogénéité de l'architecture due au fait que tous les processeurs ne sont pas forcément identiques, implique une plus grande complexité du système.

Selon une réalisation, notamment utilisée en télécommunications, les données à traiter sont des données utilisateurs de type simple ou de type complexe, les données simples devant être traitées à grand débit par le premier scénario de test, et les données complexes devant être traitées à plus faible débit par le second scénario de test.

Dans le cas d'un réseau de télécommunications, notamment de téléphonie mobile, on dispose de données utilisateurs, représentant de l'ordre de 80 % des données transmises. On rappelle que les données utilisateurs sont celles qui présentent un contenu informatif ; elles sont à distinguer des données de signalisation. Ces données utilisateurs sont divisées en deux catégories : des données simples et des données complexes. Lors d'une simulation, on effectuera deux types de tests. Le premier consiste à tester le comportement de l'équipement à tester dans le cas d'un trafic intense; pour cela on utilise des données simples. Le second test a pour but de tester le comportement de l'équipement lorsqu'il reçoit des données de différents types, pour cela on utilise des données complexes envoyées avec un faible débit.

Selon une réalisation, notamment utilisée en télécommunications, les données à traiter sont des données de signalisation qui sont traitées directement dans l'équipement de traitement du second scénario de test.

Dans le cas d'un système de téléphonie mobile, des données de signalisation sont transmises en plus des données utilisateurs. Ces données sont généralement de type complexe, et elles doivent donc être traitées par le second scénario de test.

L'invention concerne également un dispositif de test d'équipement et/ou de protocoles d'un réseau de communications, le dispositif comportant deux moyens de test, le premier permettant de traiter des données simples et le second des données complexes. Les données simples et complexes consistent en des messages de différents types échangés par des entités communicantes et traités par des protocoles, appelés également algorithmes, se trouvant dans différents états, les états représentant les étapes de ces protocoles lorsqu'ils sont modélisés sous la forme d'un automate protocolaire. Les données sont définies par leur nombre de complexité C, qui est égal au nombre d'états de l'automate protocolaire multiplié par le nombre de types de messages possibles. Ce nombre de complexité C est inférieur ou égal à une valeur prédéterminée N pour les données simples, et supérieur à la valeur N pour les données complexes. Le dispositif comprend de plus un moyen d'aiguillage permettant de trier les données reçues en fonction de leur complexité, et de les envoyer vers le premier moyen de test pour les données simples, et vers le second moyen pour les données complexes.

Selon une réalisation, le premier moyen de test est un moyen à logique câblée utilisant des composants programmables tels que des circuits FPGA ou des composants dédiés tels que des circuits ASIC.

Selon une réalisation de l'invention, le second moyen de test est un moyen logiciel exécuté sur des processeurs généralistes ou sur des processeurs dédiés.

Selon une réalisation, notamment utilisée en télécommunications, les données à traiter sont des données utilisateurs de type simple ou de type complexe, les données simples devant être traitées à grand débit par le premier moyen de test, et les données complexes devant être traitées à plus faible débit par le second moyen de test.

Selon une réalisation, notamment utilisée en télécommunications, les données à traiter sont des données de signalisation qui sont traitées directement dans l'équipement correspondant au second moyen de test.

D'autres caractéristiques et avantages de l'invention apparaîtront avec la description de certains de ses modes de réalisation, celle-ci étant effectuée en se référant aux dessins ci-annexés dans lesquels :
- la figure 1 représente un dispositif conforme à l'invention, dans lequel apparaissent des moyens de test, respectivement logiciel et câblé,
- la figure 2 représente un dispositif conforme à l'invention dans le cas où le réseau est un réseau de télécommunications, et
- la figure 3 représente la génération de trafic dans un circuit de type FPGA conforme à l'invention.

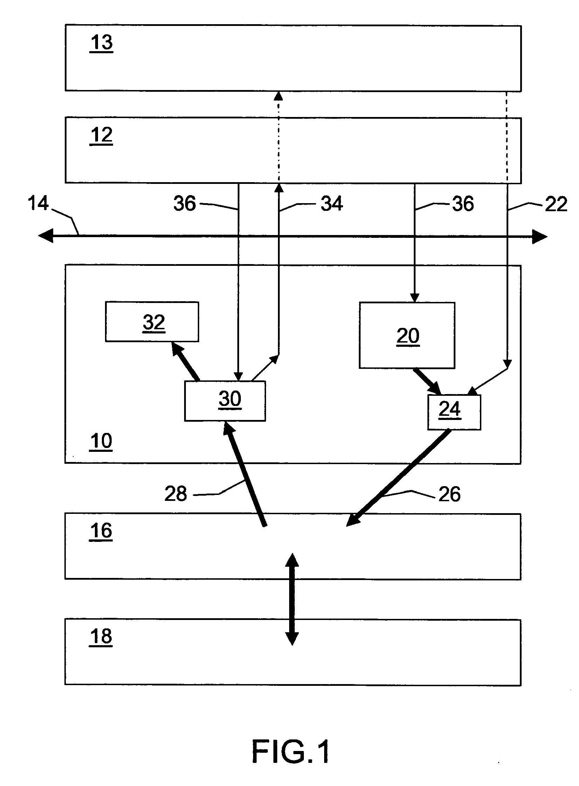

Le dispositif représenté sur la figure 1 est un simulateur ou émulateur comportant une carte FPGA 10, constituant le premier moyen de test et un pilote de périphérique 12 assurant l'interfaçage avec le logiciel 13 qui constitue le second moyen de test. Ce dispositif comporte également une interface Ethernet 16 permettant la communication avec l'équipement à tester 18 ainsi qu'un bus PCI (Peripheral Component Interconnect) 14, permettant la communication entre les moyens 10 et 12. On rappelle qu'un bus est un ensemble de liaisons physiques (câbles, pistes de circuits imprimés) pouvant être exploitées en commun par plusieurs éléments matériels afin de communiquer. Le logiciel 13 présent au-dessus du pilote de périphérique 12 est constitué de piles de protocoles développées en langage SDL (Specification and Description Language).

Lors d'une simulation, le simulateur génère des signaux de données simples et complexes destinés à être transmis à l'équipement à tester 18. Les données simples sont générées dans la carte FPGA 10 par un générateur 20. Les données complexes sont générées par le logiciel 13 et sont envoyées vers la carte FPGA 10 via le chemin 22. Les deux types de données sont alors combinés par le multiplexeur 24 qui transmet un flux de données 26 comportant à la fois des données simples et des données complexes vers l'équipement à tester 18 via le réseau Ethernet 16.

En retour, l'équipement à tester renvoie un flux de données 28 vers le simulateur. Ces données arrivent dans un aiguilleur 30 qui les trie en fonction de leur complexité. Le tri est effectué en considérant les entêtes des messages reçus. En effet, étant en simulation et non en trafic réel, on peut, par exemple, décider que toutes les données ayant un nombre de complexité C inférieur ou égal à N auront une adresse IP commençant par 0, et que toutes les données ayant un nombre de complexité C supérieur à N auront une adresse IP commençant par 1. Les données simples sont alors envoyées vers le premier moyen de test 32 situé dans la carte FPGA 10. Dans l'exemple, le traitement effectué est un simple comptage des messages. Les données complexes sont, quant à elles, envoyées, via le chemin 34 vers le logiciel 13 qui permet de tester une grande partie des fonctionnalités des protocoles à tester.

Le simulateur comporte également des moyens de liaison 36 permettant de commander le téléchargement du logiciel applicatif de la carte FPGA 10, via le bus PCI 14. Grâce à ce logiciel, l'utilisateur peut choisir les paramètres utilisés par la carte FPGA 10 pour l'aiguillage et la génération de signaux. Ces paramètres sont notamment la valeur de N permettant à l'aiguilleur 30 de distinguer les données simples des données complexes, la cadence d'émission des messages, la taille des paquets à émettre ou encore les variables à insérer dans les champs variables des paquets, tels que décrits plus loin.

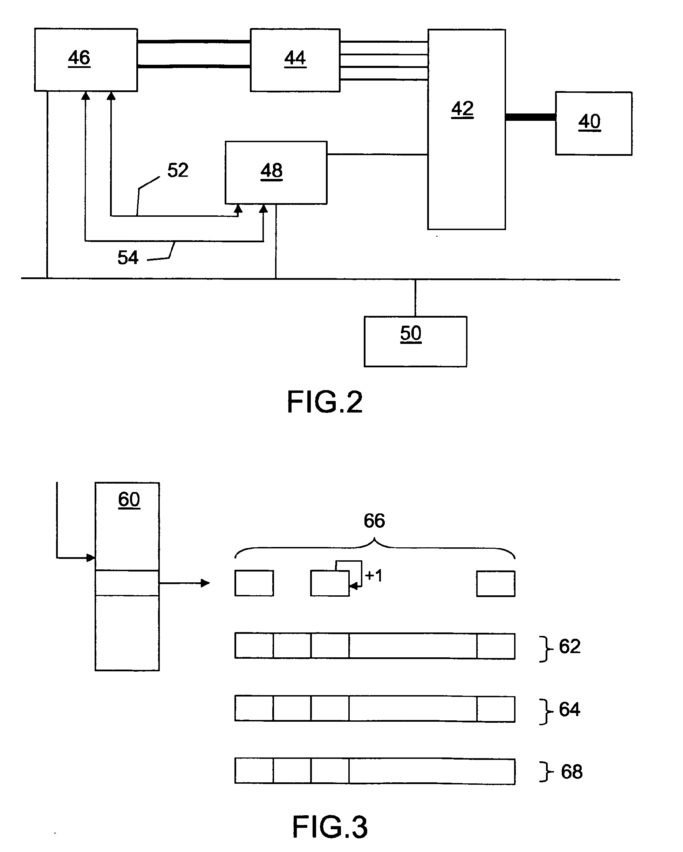

Le dispositif représenté sur la figure 2 est un simulateur réalisé dans le cas particulier d'un réseau de téléphonie mobile. L'équipement à tester 40 est un SGSN (Serving GPRS Support Node), c'est à dire un noeud GPRS qui est en charge de la gestion des services fournis aux abonnés attachés au réseau.

On rappelle que dans un système de téléphonie mobile, il existe deux catégories de données, à savoir les données utilisateurs et les données de signalisation. Les données utilisateurs représentent les données qui doivent être transmises d'un utilisateur à un autre via le réseau. Il peut s'agir notamment de données de voix, d'images ou encore de vidéo. Ces données peuvent être de type simple ou complexe et représentent plus de 80% du trafic total. Les données de signalisation, de type complexe, concernent tout ce qui se rapporte à l'établissement et au maintien des communications.

Le dispositif comporte un commutateur ATM 42 permettant de convertir les paquets de données reçues du SGSN 40 afin qu'ils puissent être transférés vers les moyens de test. Ces paquets sont ensuite envoyés, via un routeur IP (Internet Protocol) 44, vers un simulateur GTP-U (General Packet radio service Tunneling Protocol - User Plane) implémenté sur une carte FPGA 46. Dans ce simulateur se trouve un aiguillage permettant de trier les données, ainsi qu'un premier moyen de test. Les données identifiées comme étant des données simples sont traitées directement par le premier moyen de test. Les données complexes, quant à elles, sont envoyées, via une interface 52, vers un simulateur « plan signalisation » 48 qui comporte le second moyen de test, consistant en un logiciel développé en SDL.
Ce simulateur plan signalisation 48 peut également générer des données complexes qui sont envoyées, via une interface 54, vers le simulateur plan utilisateur 46 afin d'y être combinées avec les données simples générées par ce simulateur 46. Le flux total est envoyé à l'équipement à tester 40 via le routeur IP 44 et le commutateur ATM 42.

L'ensemble du dispositif est relié à une station de contrôle 50 permettant de communiquer à la carte FPGA 46 les différents paramètres à utiliser pour la génération et les tests des signaux, comme décrit précédemment, et d'analyser les résultats des tests ainsi effectués. Ce dispositif présente une configuration série qui permet de générer et de tester des signaux relativement complexes. En effet, les données reçues et transmises passent successivement par le générateur GTP-U implémenté sur la carte FPGA 46 et par le simulateur « plan utilisation » 48 (ou inversement), ce qui permet de traiter des flux combinant les deux types de données, c'est à dire des flux relativement complexes.

La figure 3 représente la génération de trafic dans la carte FPGA (10 sur la figure 1 et 46 sur la figure 2), c'est-à-dire l'assemblage des paquets à émettre dans le flux de données simples.

Pour générer les données, la carte FPGA (10 sur la figure 1 et 46 sur la figure 2) dispose de contextes 60, c'est-à-dire de jeux de paramètres caractérisant les paquets à envoyer. Dans un contexte donné, tous les paquets envoyés par la carte FPGA (10 sur la figure 1 et 46 sur la figure 2) sont construits sur la base d'un paquet prototype 62 qui définit les octets invariables. Pour générer un flux de données, la carte FPGA (10 sur la figure 1 et 46 sur la figure 2) remplit les champs variables 64 à partir de variables 66 qui correspondent à des adresses de destination ou à des numéros de séquence. Elle calcule ensuite des sommes de contrôle 68 pour chaque paquet, et rajoute cette information dans le paquet à envoyer, par exemple sous forme de bit de parité.

## Revendications

1. Procédé de test d'équipement (18 ;40) et/ou de protocoles utilisés dans un réseau de communications, le procédé comportant deux types de scénarios de test, le premier permettant de traiter des données simples et le second des données complexes, ces données simples et complexes consistant en des messages de différents types, échangés par des entités communicantes et traités par des protocoles, appelés également algorithmes, se trouvant dans différents états, les états représentant les étapes de ces protocoles lorsqu'ils sont modélisés sous la forme d'un automate protocolaire,
les données étant définies par leur nombre de complexité C égal au nombre d'états de l'automate protocolaire multiplié par le nombre de types de messages possibles, ce nombre de complexité C étant inférieur ou égal à une valeur prédéterminée N pour les données simples, et supérieur à la valeur N pour les données complexes, le procédé étant tel que les données reçues sont triées en fonction de leur complexité, et aiguillées pour que les données simples soient traitées à grand débit par le premier scénario de test, et les données complexes traitées à plus faible débit par le second scénario de test.

2. Procédé selon la revendication 1 dans lequel le premier scénario de test est réalisé avec des moyens à logique câblée (32 ;46) dans des composants programmables tels que des circuits FPGA ou des composants dédiés tels que des circuits ASIC.

3. Procédé selon la revendication 2 ou 3 dans lequel le second scénario de test est réalisé avec des moyens logiciels (13 ;48) et exécuté sur des processeurs généralistes ou sur des processeurs dédiés.

4. Procédé selon l'une des revendications précédentes, notamment utilisé en télécommunications, dans lequel les données à traiter sont des données utilisateurs de type simple ou de type complexe.

5. Procédé selon l'une des revendications précédentes, notamment utilisé en télécommunications, dans lequel les données à traiter sont des données de signalisation qui sont traitées directement dans l'équipement de traitement du second protocole de test.

6. Dispositif de test d'équipement (18 ;40) et/ou de protocoles utilisés dans un réseau de communications, le dispositif comportant deux moyens de test, le premier (32 ;46) permettant de traiter des données simples et le second (13 ;48) des données complexes, ces données simples et complexes consistant en des messages de différents types, échangés entre des entités communicantes et traités par des protocoles, appelés également algorithmes, se trouvant dans différents états, les états représentant les étapes de ces protocoles lorsqu'ils sont modélisés sous la forme d'un automate protocolaires,
les données étant définies par leur nombre de complexité C égal au nombre d'états d'automate protocolaire multiplié par le nombre de types de message possibles, ce nombre de complexité C étant inférieur ou égal à une valeur prédéterminée N pour les données simples, et supérieur à la valeur N pour les données complexes; le dispositif étant tel qu'il comprend un moyen d'aiguillage (30) permettant de trier les données reçues en fonction de leur complexité, et de les envoyer vers le premier moyen de test (32) pour les données simples, et vers le second moyen de test (13) pour les données complexes, les données simples devant être traitées à grand débit par le premier moyen de test (32 ; 46), et les données complexes devant être traitées à plus faible débit par le second moyen de test (13 ; 48).

7. Dispositif selon la revendication 6 dans lequel le second moyen de test (13 ; 48) est un moyen logiciel exécuté sur des processeurs généralistes ou sur des processeurs dédiés.

8. Dispositif selon la revendication 6 ou 7 dans lequel le premier moyen de test (32 ; 46) est un moyen à logique câblée utilisant des composants programmables tels que des circuits FPGA ou des composants dédiés tels que des circuits ASIC.

9. Dispositif selon l'une des revendications 6 à 8, notamment utilisé en télécommunications, dans lequel les données à traiter sont des données utilisateurs de type simple ou de type complexe.

10. Dispositif selon l'une des revendications 6 à 9, notamment utilisé en télécommunications, dans lequel les données à traiter sont des données de signalisation qui sont traitées directement dans l'équipement correspondant au second moyen de test (13 ; 48).

## Claims

1. Method for testing an equipment (18 ; 40) and/or protocols used in a communications network, said method comprising two types of testing scenarios, the first one for treating simple data and the second one for treating complex data, these simple and complex data consisting in messages of different types, exchanged by communicating entities and treated by protocols, also called algorithms, in different states, the states representing the steps of these protocols when they are configured as a protocol-based automaton,
the data being defined by the complexity number C equal to the number of states of the protocol-based automaton multiplied by the number of possible types of messages, the number of complexity C being inferior or equal to a predetermined value N for the simple data, and superior to the value N for the complex data, the method being configured in such a manner that the data received are sorted out as a function of their complexity, and directed in order that the simple data are treated at a high rate by the first testing scenario, and the complex data are treated at a lower rate by the second testing scenario.

2. Method according to claim 1, wherein the first testing scenario is implemented with hard-wired logic means (32; 46) in programmable components such as FPGA circuits or in dedicated components such as ASIC circuits.

3. Method according to claim 2 or 3, wherein the second testing scenario is implemented with software means (13; 48) and executed on non-specialized processors or on dedicated processors.

4. Method according to anyone of the preceding claims, notably used in telecommunications, wherein the data to be treated are user data of simple type or of complex type.

5. Method according to anyone of the preceding claims, notably used in telecommunications, wherein the data to be treated are signaling data which are treated directly in the treatment equipment for the second testing protocol.

6. Device for testing an equipment(18 ; 40) and/or protocols used in a communications network, said device comprising two testing means, the first one (32; 46) for treating simple data and the second one (13; 48) for treating complex data, these simple and complex data consisting in messages of different types, exchanged between communicating entities and treated by protocols, also called algorithms, in different states, the states representing the steps of these protocols when they are configured as a protocol-based automaton,
the data being defined by the complexity number C equal to the number of states of the protocol-based automaton multiplied by the number of possible types of messages, the complexity number C being inferior or equal to a predetermined value N for the simple data, and superior to the value N for the complex data; the device being configured in such a manner that it comprises a directing means (30) for sorting out data received as a function of their complexity, and for directing them to the first testing means (32) for the simple data, and to the second testing means (13) for the complex data, the simple data being treated at a high rate by the first testing means (32; 46), and the complex data being treated at a lower rate by the second testing means (13; 48).

7. Device according to claim 6, wherein the second testing means (13; 48) is a software means executed on non-specialized processors or on dedicated processors.

8. Device according to claim 6 or 7, wherein the first testing means (32; 46) is a hard-wired logic means using programmable components such as FPGA circuits or dedicated components such as ASIC circuits.

9. Device according to anyone of the claims 6 to 8, notably used in telecommunications, wherein the data to be treated are user data of simple type or of complex type.

10. Device according to anyone of the claims 6 to 9, notably used in telecommunications, wherein the data to be treated are signaling data which are treated directly in the equipment corresponding to the second testing means (13; 48).

## Patentansprüche

1. Verfahren zum Testen einer Einrichtung (18; 40) und/oder von in einem Kommunikationsnetwerk verwendeten Protokollen, wobei das genannte Verfahren zwei Testszenariotype aufweist: ein erstes Szenario für die Verarbeitung von einfachen Daten und ein zweites Szenario für die Verarbeitung von komplexen Daten, wobei diese einfachen und komplexen Daten aus unterschiedlichen Nachrichtentype bestehen, die von Kommunikationseinheiten ausgewechselt, und von in unterschiedlichen Zuständen befindlichen Protokollen, auch genannten Algorithmen, verarbeitet werden, wobei diese Zustände die Schritte dieser Protokolle darstellen, wenn diese als ein Protokollbasierender Automat ausgebildet werden,
wobei die Daten durch ihre Komplexitätszahl C definiert werden, die der Zustandzahl des Protokollbasierenden Automaten multipliziert mit der Zahl von möglichen Nachrichtentypen gleich ist, wobei diese Komplexitätszahl C kleiner oder gleich einem vorbestimmten Wert N bei den einfachen Daten, und größer als der Wert N bei den komplexen Daten, wobei das Verfahren so ausgebildet ist, dass die empfangenen Daten je nach ihrer Komplexität sortiert, und geleitet werden, damit die einfachen Daten durch das erste Testszenario mit einer hohen Datenrate, und die komplexen Daten durch das zweite Testszenario mit einer niedrigeren Datenrate verarbeitet werden.

2. Verfahren nach Anspruch 1, bei dem das erste Testszenario mit verbindungsprogrammierten Logikmitteln (32; 46) in programmierbaren Bauelementen, wie FPGA Schaltungen, oder in dedizierten Bauelementen, wie ASIC Schaltungen, ausgeführt wird.

3. Verfahren nach Anspruch 2 oder 3, bei dem das zweite Testszenario mit Softwaremitteln (13; 48) ausgeführt, und an nicht spezialisierten Prozessoren oder an dedizierten Prozessoren durchgeführt wird.

4. Verfahren nach einer der vorangehenden Ansprüche, welches insbesondere im Telekommunikationsbereich verwendet wird, bei dem die zu verarbeitenden Daten Benutzerdaten von einfachem Typ oder komplexem Typ sind.

5. Verfahren nach einer der vorangehenden Ansprüche, welches insbesondere im Telekommunikationsbereich verwendet wird, bei dem die zu verarbeitenden Nachrichtenübermittlungsdaten sind, die unmittelbar in der Verarbeitungseinrichtung für das zweite Testprotokoll verarbeitet werden.

6. Vorrichtung zum Testen einer Einrichtung (18; 40) und/oder von in einem Kommunikationsnetwerk verwendeten Protokollen, wobei die genannte Vorrichtung zwei Testmittel aufweist: ein erstes Testmittel (32; 46) für die Verarbeitung von einfachen Daten und ein zweites Testmittel (13; 48) für die Verarbeitung von komplexen Daten, wobei diese einfachen und komplexen Daten aus unterschiedlichen Nachrichtentypen bestehen, die von Kommunikationseinheiten ausgewechselt, und von in unterschiedlichen Zuständen befindlichen Protokollen, auch genannten Algorithmen, verarbeitet werden, wobei diese Zustände die Schritte dieser Protokolle darstellen, wenn diese als ein Protokollbasierende Automat ausgebildet werden,
wobei die Daten durch ihre Komplexitätszahl C definiert werden, die der Zustandzahl des Protokollbasierenden Automaten multipliziert mit der Zahl von möglichen Nachrichtentypen gleich ist, wobei diese Komplexitätszahl C kleiner oder gleich einem vorbestimmten Wert N bei den einfachen Daten, und größer als der Wert N bei den komplexen Daten, wobei die Vorrichtung so ausgebildet ist, dass sie ein Leitungsmittel (30) zum Sortieren der empfangenen Daten je nach ihrer Komplexität, und zum Leiten dieser Daten zum ersten Testmittel (32) bei den einfachen Daten und zum zweiten Testmittel (13) bei den komplexen Daten aufweist, wobei die einfachen Daten durch das erste Testmittel (32; 46) mit einer hohen Datenrate, und die komplexen Daten durch das zweite Testmittel (13; 48) mit einer niedrigeren Datenrate verarbeitet werden.

7. Vorrichtung nach Anspruch 6, bei dem das zweite Testmittel (13; 48) ein Softwaremittel ist, das an nicht spezialisierten Prozessoren oder an dedizierten Prozessoren durchgeführt wird.

8. Vorrichtung nach Anspruch 6 oder 7, bei dem das erste Testmittel (32; 46) ein verbindungsprogrammiertes Logikmittel ist, das programmierbare Bauelemente, wie FPGA Schaltungen, oder dedizierte Bauelemente, wie ASIC Schaltungen, verwendet.

9. Vorrichtung nach einem der Ansprüche 6 bis 8, welche insbesondere im Telekommunikationsbereich verwendet wird, bei dem die zu verarbeitende Daten Benutzerdaten von einfachem Typ oder komplexem Typ sind.

10. Vorrichtung nach einem der Ansprüche 6 bis 9, welche insbesondere im Telekommunikationsbereich verwendet wird, bei dem die zu verarbeitende Daten Nachrichtenübermittlungsdaten sind, die unmittelbar in der dem zweiten Testmittel (13; 48) entsprechenden Einrichtung verarbeitet werden.
